# EUROPEAN PATENT APPLICATION

(11) **EP 4 727 081 A1**
(43) Date of publication of application: **15.04.2026**
(21) Application number: 24209685.7
(22) Date of filing: 30.10.2024
(51) Int. Cl.: H04L 41/14, H04L 41/16, H04W 24/02, H04L 41/40, H04L 41/022, H04L 41/28

(54) **DATA MARKET APPLICATION IN A NETWORK ENVIRONMENT**

(30) Priority: 09.10.2024 EP 24205470
(71) Applicant: Deutsche Telekom AG, 53113 Bonn (DE)
(72) Inventor: Blicker, Stephan, 53343 Wachtberg (DE)
(74) Representative: karo IP

(57) **Abstract**

Techniques for managing data analytics in a network environment, the method comprising:
• providing access to a data market application, wherein the data market application includes a portal for user interaction, a data management platform (132) for business logic and/or analytics development, and a network function (NF);
• enabling users to retrieve network data from a data collection network function (NF), in particular by using a data based interface (145);
• facilitating the development, training, and/or testing of network models, in particular analytics models, using the data retrieved from the network;
• deploying the tested and validated network models, in particular analytics model, into a network core for execution; and
• providing the tested and validated network models, in particular the analytics model, into a network core network management system for orchestration of appropriate NF and execution.

## Description

The present invention relates to the field of telecommunications, and more specifically to data management and/or analytics within a core network environment, in particular a 6G core . It focuses on the deployment, execution, and management of analytics models, including machine learning (ML) and artificial intelligence (AI) models, as part of the data market infrastructure in a network, in particular a 6G network.

As telecommunications technology evolves, there is an increasing need to efficiently manage and utilize the vast amounts of data generated by modern networks. Current network architectures allow for basic data collection and monitoring but often lack integrated analytics tools that leverage the full potential of real-time network data. Existing systems typically rely on static, rule-based network management, which limits flexibility and responsiveness to changing network conditions. While AI and ML-based analytics solutions are beginning to emerge, they are still largely isolated from core network functions and often lack interoperability between different network operators.

The task of the present invention is to provide a more flexible and/or efficient network, in particular a 6G network. It is a further task of the invention to enable more efficient resource allocation, faster decision-making, and/or improved network performance.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

The invention is based on the following technical documents that are herewith included into the disclosure of the invention: TS 23.501, TS 23.502 and 3GPP TS 28.533.

According to a first aspect of the invention, a method for managing data analytics in a network environment is provided, the method comprising:
- providing access to a data market application, wherein the data market application includes a portal for user interaction, a data management platform for business logic and/or analytics development, and a network function (NF);
- enabling users to retrieve network data from a data collection network function (NF);
   ∘ the users can access the data based on predefined access rights;
   ∘ a data based interface can be used to retrieve the data; the database interface is a new interface that offers a channel to retrieve all data from any network function;
      ▪ The Data-Based Interface allows for real-time access to data generated by the various network functions (NFs) within the core network, including the Radio Access Network (RAN), Control Plane, and User Plane. In an embodiment, the core network is a 6G core network. This data includes logs, metrics, signal strength, handover events, user traffic data, session information, and more. The interface ensures continuous and immediate access to data as it's generated, enabling analytics and decision-making processes to be informed by the latest network conditions. The interface seamlessly connects with different NFs within the network, such as the Data Collection NF, Control NF, and Data Analytics NF, to retrieve and send data necessary for analytics, model training, and network optimization. It is designed to work seamlessly across the core architecture, pulling data from multiple NFs without disrupting their operation;
- facilitating the development, training, and/or testing of network models, in particular analytics models, using the data retrieved from the network; and
- deploying the tested and validated network models, in particular analytics model, into a network core for execution; and
- providing the tested and validated network models, in particular the analytics model, into a network core network management system for orchestration of appropriate NF and execution.

In an embodiment, the network environment is a 6G network environment. The network is a telecommunication network.

The method provides access to a Data Market Application, enabling users to retrieve network data from a data collection network function (NF) and facilitating the development, training, and/or testing of network models, in particular analytics models. The technical effect of this method is the efficient processing of data within the network, reducing the time required for model deployment and improving overall network performance.

The integration of real-time data processing with model development ensures that network models, in particular analytics models, are continuously trained on up-to-date data. This results in more accurate network analytics, leading to optimized network functions and better resource allocation. Additionally, faster model deployment enables quick adaptation to changing network conditions.

In an embodiment, the network data retrieved includes log files, metrics, traces, and transaction data. This provides the technical benefit of enriching the data available for model training, leading to more accurate and reliable analytics models.

The inclusion of various types of network data ensures that models are trained on a broad range of inputs, enabling the detection of patterns across different network events. This improves the accuracy and reliability of predictions, helping to optimize network operations and identify issues earlier.

In an embodiment, access rights are managed using security and privacy rules for different types of users, including internal operator developers, external vendor developers, and open-source community developers. This ensures compliance with data protection regulations such as GDPR. This allows different user types to access data based on their roles.

The system ensures compliance with privacy regulations and provides role-based access control, maintaining security while allowing different user groups (such as internal developers or external vendors) to collaborate effectively without risking data breaches or unauthorized access.

In an embodiment, the method includes an automated software pipeline for model training, testing, data preparation, and/or version control. This reduces human error and accelerates the development process.

The automated software pipeline as part of an automating model development reduces the time and effort required to prepare and test models, allowing network operators to implement optimizations faster. It also reduces the potential for errors during data preparation and model training, resulting in higher-quality models and faster deployment cycles.

In an embodiment, a business logic engine of the data market management platform ensures that models comply with operator guidelines and network policies before deployment, reducing the risk of deploying incompatible models.

By integrating a business logic engine, the system guarantees that all models are tested for compliance with operator policies and network guidelines before they are deployed. This reduces the risk of deploying models that could disrupt the network or conflict with existing systems.

In an embodiment, a model announcement mechanism notifies the network management when a model is ready for deployment, improving coordination between the data market and the network management system. In an embodiment, the network management is a 6G network management.

The announcement mechanism ensures real-time communication between the data market application and network management, allowing for better coordination and smoother integration of models. This minimizes delays in deployment, helping operators respond quickly to new challenges or opportunities in the network.

In an embodiment, the method further comprising utilizing machine learning (ML) and artificial intelligence (AI) models for performing analytics on the retrieved network data.

The use of advanced ML and AI models allows for the dynamic optimization of network functions. These models continuously learn from real-time data, adapting to changing network conditions to provide more precise predictions and insights, which results in faster, smarter decision-making and improved network performance.

In an embodiment, the method further comprising monitoring of deployed models allowing for continuous performance tracking and adjustment, improving long-term model reliability and network stability.

Continuous monitoring ensures that models perform as expected and can be adjusted in real-time if necessary. This increases the overall reliability of the network, as operators can identify underperforming models and make necessary updates or replacements to maintain network performance.

In an embodiment, certified models can be shared with other operators through an operator data management hub, fostering cross-operator collaboration and preventing vendor lock-in.

The ability to share certified models across operators fosters an open ecosystem where operators can benefit from each other's innovations. This collaboration reduces the risk of vendor lock-in, encourages innovation, and allows operators to adopt proven solutions from other networks quickly.

According to a second aspect of the invention, a Data Market Application is disclosed, comprising
- a data market portal providing user access to network data and/or model development tools, wherein the access to the network data is realized by means of a data-based interface;
   ∘ Hence, the data based interface is configured to retrieve data from any network function; the database interface is a new interface that offers a channel to retrieve all data from any network function
- a data market management platform for managing business logic, analytics development, model deployment, and/or real-time interaction; and
- a data market network function (NF) responsible for executing and managing network models, in particular analytic models.

The Data Market Application for a network includes a portal for user access, a management platform for analytics deployment, and a network function (NF) responsible for executing analytics models.

This creates a comprehensive environment for managing the entire lifecycle of analytics models, from development and testing to deployment and monitoring.

By centralizing these functions in a single platform, operators can streamline their processes and reduce complexity.

In an embodiment, an inference endpoint allows real-time execution and updating of models based on current network data, ensuring that models remain relevant and adaptable to changing conditions.

The ability to update models in real-time based on network data allows the system to respond quickly to changing conditions, maintaining optimal performance even as the network evolves. This ensures that models are always up-to-date and relevant to current network challenges.

In an embodiment, the data market portal enables monitoring of deployed models, the ability to modify and/or to terminate models based on performance criteria.

Continuous performance monitoring ensures that poorly performing models can be quickly identified and either adjusted or removed, preventing them from negatively impacting the network. This enhances overall network reliability and reduces the risk of prolonged performance degradation.

In an embodiment, the data market application comprises cloud-based infrastructure for hosting analytics models, offering scalable computing resources, and/or managing the lifecycle of deployed models.

The use of cloud infrastructure allows operators to scale their analytics capabilities as needed, without the need for significant hardware investments. This enables the system to handle increasing amounts of data and provides flexibility to adjust resources dynamically.

ML and AI models can be integrated into the Data Market Application, allowing for sophisticated analytics and optimization tasks, improving network efficiency and service quality.

Advanced analytics enable the system to make more precise decisions, improving both the efficiency and quality of service within the network. By applying ML and AI, the system can optimize traffic flow, reduce congestion, and improve user experiences.

The operator data management can hub allow certified analytics models to be shared between operators, promoting interoperability and/or collaborative innovation.

Interoperability between operators encourages the sharing of best practices and innovations. By collaborating, operators can improve their networks more rapidly and avoid duplication of efforts, fostering a more efficient and innovative ecosystem.

According to a third aspect of the invention, a network environment is disclosed that comprises:
- a Radio Access Network (RAN) configured to provide connectivity between user equipment (UE) and the core network;
- a Control Plane configured to manage signaling, network operations, and control functions such as mobility management and session establishment;
- a User Plane configured to handle data transmission between the user equipment and the network;
- the Data Market Application described above, which is integrated within the core network, wherein:
   ∘ the Data Market Application is operatively connected to the RAN for real-time data collection, enabling the extraction of access-related data such as signal strength, handover events, and mobility information;
   ∘ the Data Market Application is connected to the Control Plane to gather and process control-related data, including signaling information, session management, and network state changes, for use in analytics and network optimization;
   ∘ the Data Market Application is connected to the User Plane to collect user traffic data, such as data flow metrics, latency, and throughput, enabling the analysis and optimization of user experience and network performance;
   ∘ In an embodiment, the Data Market Application can process the collected data to train, deploy, and manage analytics models, including machine learning (ML) and artificial intelligence (AI) models, to optimize network operations across the RAN, Control Plane, and User Plane, improving network efficiency and resource allocation.

In an embodiment, the network environment is a 6G network environment. The network environment is configured to execute the steps of the inventive method.

By being technically integrated with the RAN, Control Plane, and User Plane, the Data Market Application is able to gather comprehensive data from all core aspects of the network. This allows for holistic optimization of network operations, improving overall network performance, resource allocation, and the end-user experience.

The Data Market Application can be connected to a data collection network function (NF), which gathers real-time data used for analytics model development.

Models trained on the most up-to-date data are more relevant and accurate, leading to better decision-making in network management and improved network optimization.

The Data Market Application can include monitoring tools for tracking the performance of deployed models, enhancing their reliability and ensuring optimal network operations.

Continuous tracking ensures that models remain effective and can be adjusted as needed, contributing to the long-term stability and performance of the network.

### Figures

In the following, preferred implementation examples of the present invention are explained with reference to the accompanying figure:
- Fig. 1:: shows a data market as part of a 6G core network architecture;
- Fig. 2:: shows a data application scenario;
- Fig. 3:: shows a service procedures replaced by analytics;
- Fig. 4:: shows an architecture selection exposure;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The following abbreviations will be used. NF = network function; ML = machine learning; AI = artificial intelligence; SW = software; DBI = Database Interface;

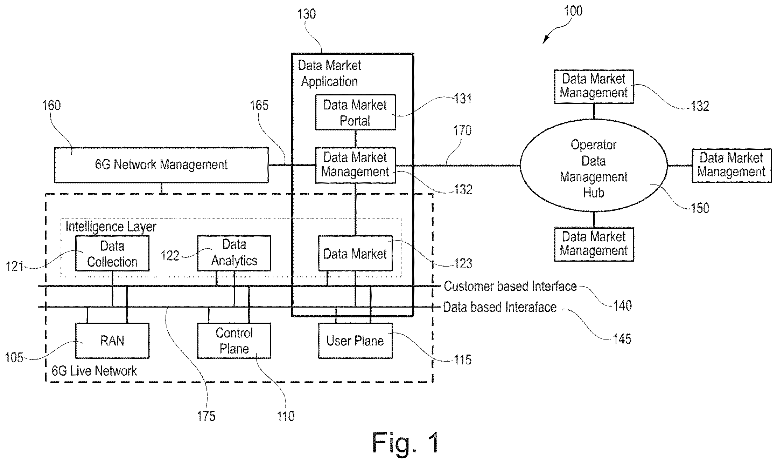

Fig. 1 shows a data market as part of a 6G core network environment 100 illustrated on a high level. Fig. 1 shows a RAN access control 105, a control plane 110, a user plane and a network intelligence layer 120, wherein the intelligence layer 120 comprises a data collection NF 121, a data analytics NF 122 and a data market NF 123, wherein the data market NF 123 is also part of the data market application 130 that will be described below. Up to our knowledge, such a data market NF 123 and the corresponding data market application 130 have never been described before.

Fig. 1 shows a customer-based interface 140 that can be equivalent to a service-based interface for control and user plane signaling. A data-based interface 145 is interface that has never been described before that offers a channel to retrieve all data from any network function (like existing event exposure data but also lock files, metrics).

The data market application 130 is configured to be under full control and ownership of the network operator of the 6G environment. The data market application 130 comprises the following components
- a data market portal 131 that represents a frontend to all users of the data market application 130;
- a data market management platform 132 representing a business logic and an analytics development platform with all relevant functions, as well as an interfaces to 6G live network management functions that need to be served for deployment and correct handling the data market network function 123 and/or an interface to an operator data management hub 150 for interoperability certification between operators;
- the data market network function 123 that is network function that comprises relevant analytics functions of the data market application developers 130, including machine learning and/or artificial intelligence concepts and models that fit for a certain purpose;
- the operator data management hub 150 that ensures (if required) interoperability between analytics utilized by different operators. It is possible to certify analytics models across an operator community and share them appropriately;

The data market application 130 provides application developers with the opportunity to define core network related business use cases with support of data analytics. It allows developers to define an overall software packet for providing the analytics including software utilized for machine learning and artificial intelligence based analytics. It disaggregates the development and execution of analytics, machine learning and or artificial intelligence interference and points. Operators can certify and approve the implementation according to the guidelines and rules before deploying it into the core network. Operators can benefit from ideas from a community of SME analytics companies as well as from suppliers or even in-house developers. Due to the openness, operators can avoid vendor locks and support technical diversity of ideas and software implementations.

The Data Market Application can improve the decision-making process within the Control Plane by providing insights generated from real-time data. For instance, it can predict the optimal time for session handovers based on historical network conditions and user behavior. This leads to more efficient session management, better resource allocation, and a reduction in dropped sessions or failed handovers, thereby enhancing the overall performance and stability of the 6G network.

The components of the data market application 130 can have the following requirements:
1. Data market portal 131 :
   - type of customers: i) internal operator developers; ii) external 6G core vendor developers; iii) external analytics provider developers; iv) open source community developers;
   - access rights: i) system supports access management based on type of customers; ii) exes feature can be restricted based on policy of the operator. Restrictions can apply for the following cases: data set content, model content, hosting of models, dataset and spaces, repository creation, repository size, access to ML tools and software, operator support, GPU training spaces, interference endpoints (data market), and/or data set viewers;
   - portal features: logon and logoff, registration, access to solutions, and/or development spaces, models, documentation based on the given access rights;
2. Data market management platform 132:
   - platform: cloud infrastructure, CPU and GPU, memory, and/or storage offerings;
   - datasets: data sets are collected from the data collection network function 121 and to the adjacent repositories (based on the access rights and given prime leaders like time space, content), and/or data sets can be stored in the development space;
   - data science model development, training, testing:
      ∘ AIOPS software offerings and postings to user
         ▪ data set preparation including all lab functions and SW libraries;
         ▪ data pipeline development and ML execution;
         ▪ interference endpoints for training;
         ▪ test automation tools and versioning;
   - deployment: model transfer to data market and 6G network management, model invocation via the 6G network management including business logic, model monitoring access from the data market pipeline unit, model termination via 6G network management including business logic, model update (via 6G network management including business logic), model alignment via common operator data management hub 150, and/or common security space in multi-operator domains for joint and compatible models;
3. Operator data management hub 150:
   - secured model transfer, model exchange wherever compatibility is required and has to be aligned;
   - models can be frozen for usage and non-usage;
   - common space for development and approval;
   - operator community tools;
   - multi-operator point of trust;
4. Data market network function 123:
   - model transfer approval;
   - interference in operation;
   - monitoring in operation;
   - deployment, un-deployment, update, and/or modification;

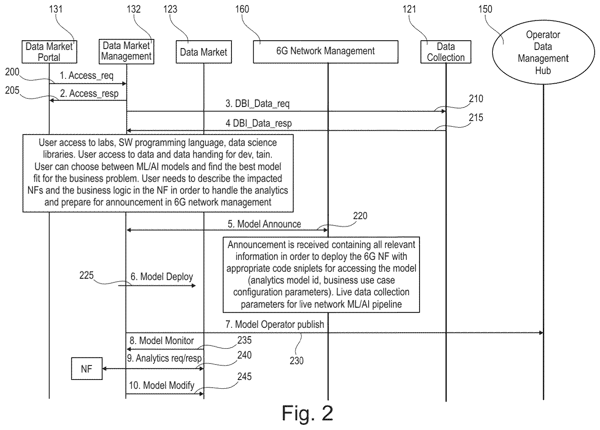

Fig. 2 illustrates inventive workflows supported by the data market portal 131, the data market management module 132, and the data market network function 123.

The data market application includes the components of the data market portal 131, the data market management platform 132 and the data market network function 123. The workflows require i) a first interface 165 between the data market management module 132 and a 6G network management 160, ii) a second interface 170 between the data market management module 132 and the operator data management hub 150, iii) a third interface 175 between the data market management platform 132 and the data collection network function 121.

The workflow of Fig. 2 comprises the following steps:
step 200: Access Request: A user requests access to the data market management platform 132. Access is granted based on the access rights according to data privacy and security rules.
step 205: Access Response: A developer suite is provided to the user. The User is able to start working and gets all relevant tools based on the access rights.
step 210:DBI Data Request: The user requests the data based on his access rights. Data is retrieved from live network data collection NF 132. The uer is able (according to access rights) to utilize hyper parameter in order to get the right data in the appropriate ranges. Data from NF is offered (traces, transaction data, logs, metrics). DBI is used (refer to Fig. 1).
step 215: DBI Data Response: Data is provided to a user's workspace. The user can utilize the full pipeline of model development and data science. The user can develop, train and/or test models with appropriate labs, software libraries and training and/or testing data. User defines the business use case (consumer NFs of the analytics and the name of the analytics model). It is assumed that Data market management can also contain software for test automation and also version control. The full package is offered. The network operator may partner with hyper scaler platforms and appropriate products for this.
step 220: model announce: The user commits the tested model and provides the model name and the business logic to the 6G network management 160 in order to be considered for 6G NF core network deployment. The Data market management platform 132 also deploys the data market NF.
step 225: model deploy: Model deployment in the cloud. The data market 123 retrieves the data needed from the data collection NF and prepares the data to be utilized for the analytics model. The data market 123 is now ready to be accessed by the defined NFs in the core network.
step 230: model operator publish: The model including all relevant hyper parameters and artefacts can be published to the operator data management hub 150 which makes the model fully accessible for other operators. Other operators may check the model against interoperability and certify the artefact to be used for inter operator 6G core network scenarios.
step 235: Model monitor: Model performance can be monitored e.g. via continuous input parameter statistics (distributions, values, other criteria).
step 240: Analytics Request Response: Core Network NFs configured by the 6G network management 160 (according to the information received via model announce command) requests the Data Market NF 123 via DBI (refer to Figure 1).
step 245: Model modification: The Model is modified, terminated and/or updated based on model monitoring results. All modification of the data market NF which has impact to the overall business logic in the core network needs to be announced via Model Announce. Modification can mean update or also terminate. So that Data Market NF is de-installed from the network.

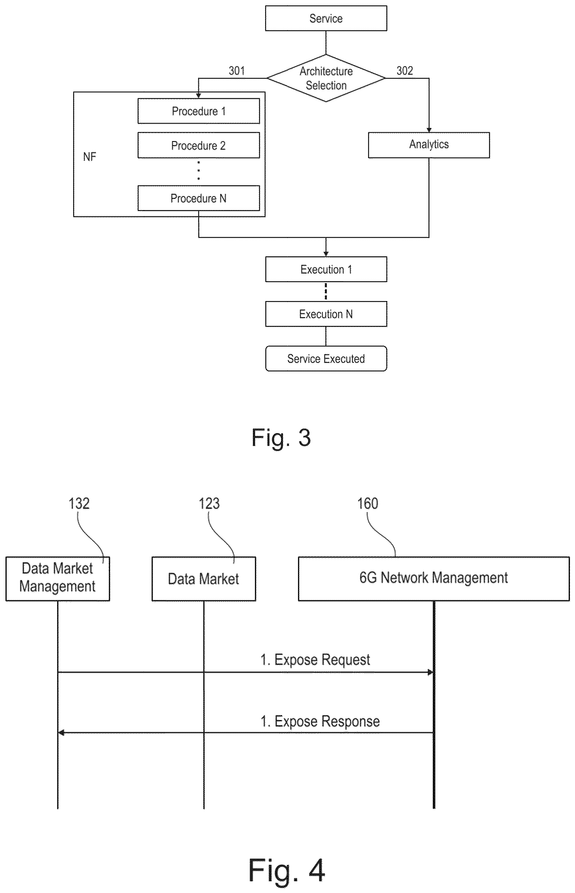

Fig. 3 shows a service procedures replaced by analytics.

In an example: A data market analytics user would like to incorporate intelligent means in order to replace or complement rule based services in 6G network functions.

The Data market user defines a complete business use case and develops the analytics based on the above mentioned procedures described in Fig. 2. Once the analytics are developed and ready for deployment the data market user can completely expose the analytics for the service to the operator network management system. The interface between data market management platform 132 and the 6G network management 160 needs to be invoked and all information needs to be exposed in order to inform the 6g network management that a first architecture 301, the first Architecture 301 and a second Architecture 302, or the second Architecture 302 will be invoked.

Fig. 4 shows an architecture selection exposure.

The Architecture selection needs to be exposed in a new and inventive way by using the first interface 165 between data market management platform 132 and operator network management (see Fig. 4)

### Contents:

a. Input of the Analytics, Output of the Analytics (e.g. via standard XML based description languages)
b. Impact in the NF (procedures to be considered and not considered in the NF and analytics invocation information for the procedure if there is any)
   i. NF Procedure 1..N invokes Analytics
   ii. NF is replaced by Analytics

The 6G network management domain needs to decode the exposure information and create the appropriate NF for deployment in a modular way. It needs to replace/ complement procedures and provide means for data market analytics retrieval.

A possible use case of the invention is a faster session setup due to decreased procedures and increased analytics in the code.

### reference signs

- 100: 6G network environment
- 105: RAN access control
- 110: control plane
- 115: user plane
- 120: network intelligence layer
- 121: data collection NF
- 122: data analytics network function
- 123: data market network function
- 130: data market application;
- 131: data market portal
- 132: data market management platform
- 140: customer-based interface
- 145: data-based interface
- 150: operator data management hub
- 160: 6G network management
- 165: first interface
- 170: second interface
- 175: third interface
- 301: first Architecture
- 302: second Architecture

## Claims

1. A method for managing data analytics in a network environment, the method comprising:
• providing access to a data market application, wherein the data market application includes a portal for user interaction, a data management platform (132) for business logic and/or analytics development, and a network function (NF);
• enabling users to retrieve network data from a data collection network function (NF), in particular by using a data based interface (145);
• facilitating the development, training, and/or testing of network models, in particular analytics models, using the data retrieved from the network;
• deploying the tested and validated network models, in particular analytics model, into a network core for execution; and
• providing the tested and validated network models, in particular the analytics model, into a network core network management system for orchestration of appropriate NF and execution.

2. The method of claim 1, wherein the network data retrieved includes log files, metrics, traces, and transaction data from the network core.

3. The method of any of the claims 1 to 2, the method further comprising applying security and privacy rules to manage access rights for different types of users, including internal operator developers, external vendor developers, and open-source community developers.

4. The method of any of the claims 1 to 3, wherein the data market application further comprises a software pipeline for automating the model training and testing process, including data preparation and/or version control.

5. The method of any of the claims 1 to 4, wherein the data market management platform (132) integrates a business logic engine for ensuring compliance with operator guidelines and network operational policies before model deployment.

6. The method of any of the claims 1 to 5, further comprising generating a model announcement to notify the network management system when a model is ready for deployment, including relevant business logic and model parameters.

7. The method of any of the claims 1 to 6, further comprising utilizing machine learning (ML) and artificial intelligence (AI) models for performing analytics on the retrieved network data.

8. The method of any of the claims 1 to 7, further comprising monitoring the performance of the deployed models in real-time.

9. The method of any of the claims 1 to 8, further comprising enabling interoperability by sharing certified models with other operators through an operator data management hub.

10. A data market application for a network, comprising:
• a data market portal providing user access to network data and/or model development tools, wherein the access to the network data is realized by means of a data-based interface;
• a data market management platform (132) for managing business logic, analytics development, model deployment, and/or real-time interaction; and
• a data market network function (NF) responsible for executing and managing network models, in particular analytic models.

11. The data market application of claim 10, further comprising an inference endpoint, wherein analytics models as network models are executed, monitored, and/or updated based on real-time network data.

12. The data market application of claim any of the claims 10 to 11, wherein the data market portal enables monitoring of deployed models, the ability to modify and/or to terminate models based on performance criteria.

13. The data market application of claim any of the claims 10 to 12, further comprising cloud-based infrastructure for hosting analytics models, offering scalable computing resources, and/or managing the lifecycle of deployed models.

14. The data market application of claim any of the claims 10 to 13, further comprising an operator data management hub for certifying and sharing analytics models between different operators to enable interoperability.

15. A network environment, comprising:
• a Radio Access Network (RAN) configured to provide connectivity between user equipment (UE) and a core network;
• a Control Plane configured to manage signaling, network operations, and control functions such as mobility management and session establishment;
• a User Plane configured to handle data transmission between the user equipment and the network;
• a Data Market Application of claim 10, integrated within the core network, wherein:
∘ the Data Market Application is operatively connected to the RAN for real-time data collection, enabling the extraction of access-related data such as signal strength, handover events, and/or mobility information;
∘ the Data Market Application is connected to the Control Plane to gather and process control-related data, including signaling information, session management, and/or network state changes, for use in analytics and network optimization;
∘ the Data Market Application is connected to the User Plane to collect user traffic data, such as data flow metrics, latency, and throughput, enabling the analysis and/or optimization of user experience and network performance.
